# EUROPEAN PATENT SPECIFICATION

(11) **EP 0 820 682 B1**
(45) Date of publication and mention of the grant of the patent: **02.08.2006**
(21) Application number: 96910260.7
(22) Date of filing: 29.03.1996
(51) Int. Cl.: H04Q 3/00

(54) **NARROW BAND INTEGRATED APPLICATION NETWORK WITH MULTIFUNCTIONALITY**
INTEGRIERTES SCHMALBAND-ANWENDUNGSNETZ MIT MULTIFUNKTIONALITÄT
RESEAU D'APPLICATIONS INTEGRE EN BANDE ETROITE MULTIFONCTIONNEL

(30) Priority: 12.04.1995 SE 9501362
(43) Date of publication of application: 28.01.1998
(73) Proprietor: TELIA AB, 123 86 Farsta (SE)
(72) Inventor: LILJESTAM, Lars, S-854 66 Sundsvall (SE); NORDSTRÖM, Nils- Ake, S-857 33 Sundsvall (SE)
(74) Representative: Akerman, Marten Lennart
(86) International application number: PCT/SE1996/000415
(87) International publication number: WO 1996/032820

(56) References cited:
- WO-A-94/06236
- WO-A-94/06251
- DE-A- 4 303 996
- US-A- 5 434 852

## Description

### TECHNICAL FIELD

The present invention relates to a logical and physical structure for a narrow band integrated applications network including functionality for circuit switched networks PSTN (Public Switched Telecommunication Network), digital integrated service networks ISDN (Integrated Services Digital Network), mobile telephony NMT (Nordic Mobile Telephony) and GSM (Global System for Mobile communications) and cordless communications systems, for instance DECT (Digital European Cordless Telecommunications). The invention supports especially personal mobility by means of personal number and terminal mobility.

### PRIOR ART

In the networks of today one has by historical traditions built altogether separate networks based on the type of access form one has towards the terminal (fixed [stationary]/mobile, digital/analog etc). Despite that these networks on a higher level have almost exactly the same service offer, one gets "closed" networks with dedicated network elements and software platforms of their own. This implies a difficult management-problem because one on one hand shall coordinate a number of software platforms and on the other hand have different operation and maintenance systems for these networks. The different networks of today are moreover from a comprehensive perspective inefficient, for instance they only manage a certain exchange, a certain type of traffic.

Another problem is how to introduce personal number on a wide basis in existent systems. The services which exist today with regard to personal number (Telia Persona and Telia Zone) are not based on any strategic network architecture for these services.

In the patent literature a number of documents are known in this field.

WO 94/6 251 shows a network architecture and a signal protocol for a telecommunications network. The nodes of the network are connected to two different networks: One connection network and one signal network. The software is also divided into two different parts; one connection related part and one service related part.

WO 94/6 236 describes a communications system which supports personal telephone numbers. The system is based on a "network platform" which functions as an interface towards different communications systems such as PSTN, mobile telephone network, ISDN etc. The platform all the time updates with the position of the subscribers. A subscriber in the system can use the same personal number for cordbased and cordless communication as well as for fax- and paging services.

EP, A, 587 259 relates to a software architecture for a telecommunications system. According to the document an exchange is equipped with "application modules" which each solves tasks connected to a certain network (for instance ISDN, PSTN, PLMN) but which can communicate with each other.

WO 94/16 516 shows a digital cordless system which offers a big supply of functions and which shares certain functionalities with PSTN by utilizing a standardized interface (ISDN). The system is based on a simplified architecture.

According to the invention a new narrow band network can be built where the number of exhanges are reduced and made more efficient, and only one single software system need to be maintained and further developed. This network supports the use of personal number UPT (Universal Personal Telecommunication service) which is independent of access form; i.e. it makes no difference if for instance a PSTN-user, DECT-user or GSM-user utilizes an UPT-number. The architecture is a public platform for supporting a massive use of personal number.

"DE 43 03 996 discloses a radio telephone of a wireless communication network with integrated access device to a communication service. According to the document, to obtain access to a communication service, especially to the UPT (Universal Personal Telecommunication) service, a DTMF (Dual Tone Multi-Frequency) transmitter in the form of an independent access device is usually used. It is proposed to integrate the access device to the communication service in a radio telephone of a subscriber to the wireless communication network according to the DCS 1800 standard."

### CONCLUSION OF THE INVENTION

In the network according to the invention the network is divided into four different functional subnetworks: Mobility Network, Service Network, Switching Network and Connection Network: These subnetworks can be developed separately and become both technology- and supplier independent because they have stricly defined interfaces between them. Further, no unwanted traffic is allowed between the subnetworks, for instance no signalling for handover will be visible outside the Connection Network.

The network structure constitutes a platform for introduction of personal mobility connected to today existing terminal types and network types. The personal mobility is neither connected to access form, which means that the network can manage just any types of narrow band access networks.

Terminal mobile functions (location updating, handover and paging) are allocated to the connection network, and person mobility functions (registration/deregistration of users) to the service network. Further, the mobility aspects in the network will be separated from the connection functions by a logical (and physical) separation of the mobility network and the connection network. Introduction of these subnetworks also implies new types of signalling functions.

The terminal types of today must at the same time be completed with modified access protocols in order to create a uniform digital access signalling which supports personal mobility. At first hand the access protocols must be completed with registration/deregistration functions for the user of the terminal. Further one has to convert analog access protocols (DTMF and NMT-access) to digital form and after that emulate the digital access protocols (DSS.1+ and DSS.1+m).

Because the access side and the service side of the network have been logically and physically separated, the network structure also can be developed to receive broad band accesses by upgrading of the access network. This possibility is not dealt with in greater detail in the patent application.

### BRIEF DESCRIPTION OF THE DRAWINGS

The invention will now be described in detail with reference to enclosed drawings, where;
Figure 1 is a functional diagram over the invention with its logical subnetworks,
Figure 2 is a diagram over relations between address entities according to the invention,
Figure 3 is a more detailed diagram over the implementation of the invention,
Figure 4 is a diagram over cross connected connection between access nodes and local exchanges,
Figure 5 is a flow chart over registration of users,
Figure 6 is a flow chart over deregistration of users,
Figure 7 is a flow chart over user originated calls from mobile terminal,
Figure 8 is a flow chart over user terminated calls towards mobile terminal, and
Figure 9 is a flow chart over handover between access node control units which belong to the same access node.

### DETAILED DESCRIPTION OF THE INVENTION

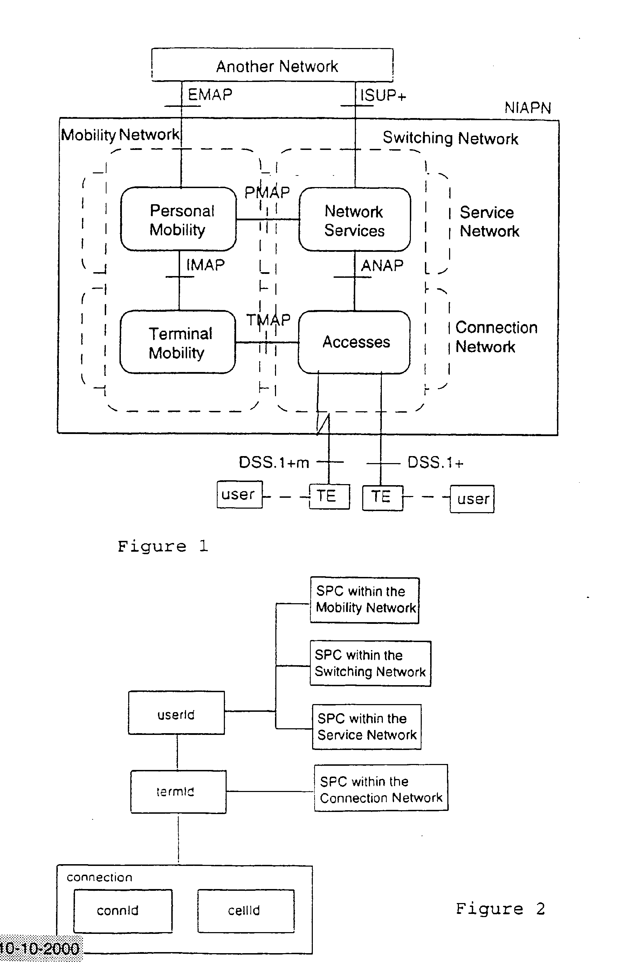

The invention consequently relates to a logical and physical network structure to support all imaginable services within different application networks, for instance PSTN, ISDN, NMT, GSM and DECT. I Figure 1 is shown the logical division of the network into subnetworks, functionalities and interfaces.

The network structure spans a twodimensional function plan which has four quadrants: Personal mobility, Network services, Terminal Mobility and Accesses. In Figure 1 is shown how the networks structure is looking from this approach. The network structure can further be divided into four logical subnetworks round these quadrants in the following way:
- The service network consists of the functions personal mobility and network services. In the service network are included UPT-services, IN-services (Intelligent Network), for instance PLUS- and conversion services, and special services, for instance voice mail box. The service network has interface towards the networks of other operators and towards the connection network. Further one also has interface on level 3 (=access signalling) towards the terminals.
- The connection network consists of functions for accesses and terminal mobility. In the connection network all terminal mobility is isolated which results
in that the functions handover and location upating of terminal are invisible to the above laying service network. The connection network connects equipment on level 2 in the form of concentrators, multiplexors MUXes and different types of base stations BS. The connection network has interface towards the service network and terminates all radio protocols on level 3 towards the terminals.
- The mobility network consists of functions for personal and terminal mobility. The subnetwork manages registration/deregistration functions for personal and terminal mobility, and support functions for routing and paging. The mobility network only consists of signalling paths, which can be integrated with or be separated from the signalling paths of the switching network.
- The switching network consists of functions for accesses and network services, i.e. functions for control of switching trains and connection management. All switches therefore belong to this network. The switching network has interface towards the mobility network. Here are among other things the service profiles of the users and authentication data collected.

In Figure 1 is shown six systems carrying interfaces in the network structure. By system carrying is meant that these interfaces are not influenced by the specific technology or the service content for a certain realization of the network structure.

The following system carrying interfaces exist:
- The interface accesses-terminal mobility: The interface is defined by the protocol TMAP (Terminal Mobility Application Part). TMAP belongs to the connection network. The protocol includes the functions terminal-roaming, terminal identity control (control of the "black list") and handover.
- The interface accesses-network services: The interface is defined by the protocol ANAP (Access Node Application Part). ANAP belongs to the switching network. The protocol includes functions for connection/disconnection of connection towards a certain connection point within the access network. ANAP is also intended to carry the digital access signalling (DSS.1+ and DSS.1+m).
- The interface terminal mobility-personal mobility: The interface is defined by the protocol IMAP (Internal Mobility Application Part). IMAP belongs to the mobility network. The protocol includes functions for user- and terminal registration/deregistration and terminal compatibility control.
- The interface network services-personal mobility: The interface is defined by the protocol PMAP (Personal Mobility Application Part). PMAP belongs to the service network. The protocol includes functions for collection of user data to local exchanges LX/VDB, management of user registration/deregistration and authentication.

The following external system carrying interfaces exist:
- The interface personal mobility-other network: The interface is defined by the protocol EMAP (Exernal Mobility Application Part). EMAP belongs to the mobility network. The protocol includes functions for registration/deregistration of users from other networks, and to give/collect routing information at establishment of switching train to/from other network.
- The interface network services-other network: The interface is defined by the protocol ISUP+. ISUP+ belongs to the switching network and the connection network (used at handover). ISUP+ follows in the main ISUP (ISDN User Part) but with the important exception that routing also can be made by signal point codes, which means that roaming number need not be managed.

The following access interfaces exist:
- DSS.1-: Digital access protocol for not mobile terminals. Based on DSS.1 for ISDN.
- DSS.1÷m: Digital access protocol for mobile terminals. Includes specific radio functions for radio access and handover. Also mobility management functions for location updating are included.

Within the network structure according to the invention a number of types of relations and addressable elements must be possible to manage. This moreover shall be done in a uniform way between different networks of this type. The most important adressable components within the network structure are: User, terminal, connection point and network element. This application only relates to addressing within a public network; numbering schemes and addressing within PTN is not dealt with.

In order to manage a user which is not connected to a certain terminal and moreover sometimes can have different user roles (private, at the job etc) some form of personal number must be used. Suitable candidates for personal numbers are constructed according to rec. E.212 (GSM IMSI) or E.168 (UPT-number). A user can register himself/herself at a personal number in two different ways in the network structure: By a SIM-card pushed into the terminal (and personal code), or manual registration by the user via keyset. The first case presupposes intelligent terminals of GSM MS-type, whereas the latter case is intended for more simple terminals of DTMF-type. Of course there is also the possiblity that the operator defines a semipermanent connection between a certain terminal/connection point and user. This can be suitable for people who don't have a need to move a lot and don't want to change to a modern terminal.

The network structure according to the invention manages the terminal mobility quite separated from the personal mobility. The personal mobility is connected to a personal number, whereas the terminal mobility is connected to a terminal identity. The terminal identity (termId) is used for two purposes in the network structure: Control of terminal type and management of handover and location updating. In the first case the network will mask out terminal type from termId to check whether the network supports this terminal type and if it is in any "black list". In the second case some identity is needed to connect the terminal to current connection point (fixed or mobile). When the terminal moves, handover is triggered at conversation state or location updating in idle position. In both cases the =elation between connection point and terminal shall be updated. Because these functions only concern the terminal mobility, the relation between terminal and user in the network according to the invention is not changed.

A connection point can be of fixed (stationary) or mobile type. The relation between terminal and connection point are wholly managed within the connection network in the network structure. A connection point for a fixed terminal is addressed by component number (MUX or concentrator) and a consecutive number for the time slot in question. A mobile connection point is always a cell and is therefore addressed by a cell identity. This cell identity can be constructed according to GSM CGI (i.e. MCC, MNC, LAC and CI).

At switching trains which uses personal numbers the switching train must be routed to the right exchange. It is suitable that the network element is addressed by a distinct signal point code (SPC). In GSM roaming number (B-number according to rec. E.164) is used to route terminating switching trains; this principle implies a management of special series of numbers. This management is not necessary according to the invention because it is presupposed that ISUP+ even manages addressing by means of an SPC.

In Figure 2 is shown a picture of the relations between the different address entities within the network structure according to the invention.

The relation between the user and the signal point code SPC for the mobility network relates to the possibility to derive from a personal number (=userId), an address to the mobility network to register a user or ask for routing information at calls. The routing information will among other things include an SPC to an exchange within the switching network. At activation of services related to a certain user, a relation will arise between one or more service nodes, which are addressed by an SPC.

Relations between userId and termId are joined up at registration of the user in such a way that a termId is compulsory at this procedcure. TermId will be connected to a certain network element in the connection network and a certain connection point within this network element. A connection point can be of fixed (stationary) type (connid) or radio access type (cellId).

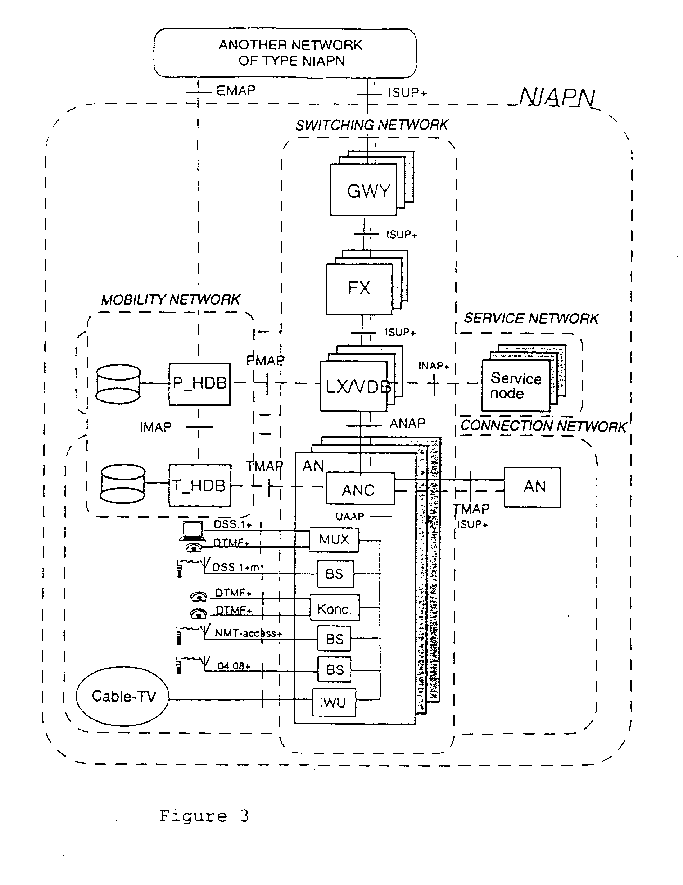

In Figure 3 is shown how the invention can be implemented. The invention is in this realization only intended for narrow band terminals with maximal data speed according to N-ISDN. The basic telecommunications services which are supported are speech and data communication with regard to the protocol functions which can befound in DSS.1 for N-ISDN. Data communication via the network structure is not further discussed in this application. The network structure also supports IN-services via different service nodes in the service network.

In Figure 3 there are broken lines which indicate network elements which belong to the different subnetworks. A network element consequently can belong to a number of subnetworks, which shall be interpreted that certain functions in the network elements belong to different subnetworks. For instance P-HDB will belong to both the mobility network and the service network; this "interference" is solved by looking at which operations belong to a certain interface (EMAP, IMAP or PMAP). EMAP and IMAP belong to the mobility network, whereas PMAP belongs to the service network because these interfaces are internal within respective subnetwork.

The network structure according to the invention include the following types of network elements: Data bases, exchanges, service nodes and access nodes (AN). AN is a logical network element which is realized by an access control unit ANC (Access Node Controller) and access network. The access network consists of components on level 2 in the form of MUXes, concentrators and base stations (BS). All network element types are used by a number of subnetworks.

In the switching network are switches/exchanges and the parts of the connection network which create logical channels for signalling and data towards superior switch/exchange level. The switching network has a strict hierarchical structure with three different levels: Local switches LX/VDB, transition switches FX, and network ports GWY. In LX/VDS (local switch with visitor register) there is a first connection point for a connection, this thereafter goes towards FX-level and then either out from the network via GWY, or stops on the FX-level. Here the connection can be directly connected cowards another LX/VDB belonging to the transition switch FX or go to another FX which in its turn connects the switching train towards subordinate LX/VDB. The switching network has interfaces towards the mobility network (PMAP), the service network (INAP+), other network (ISUP+) and towards the terminals (DSS.1+). Protocols for radio accesses, however, do not belong to the switching network, but these belong to the connection network.

The service network is of traditional type and consist in well-known IN-manner of service nodes (SDF and SCF). These services are "triggered" at calls for different additional services in the access protocol (DSS.1+). All IN-services are included here, i.e. rerouting services, VPN, voice mail box etc. Most IN-services are triggered from the local switch LX/VDB via INAP+, but with one exception: UPT-number. A UPT-number will "trigger" the operation transmitRoutingInfo from LX/VDB towards P-HDB. P-HDB is consequently looked upon from the service network as an IN service node, but one has the specific protocol PMAP, and not INAP+. The service network moreover has interface towards the connection network in the form of the protocol ANAP, by which operations/parameters for service calls are carried from the terminal.

The mobility network includes two databases in the form of personal home register P-HDB (Home Database) and terminal home register T-HDB. P-HDB corresponds approximately to GSM HLR, but with the big difference that an LX/VDB always addresses the network's own P-HDB and never directly any other network's P-HDB. P-HDB will for instance at the operation transmitRoutingInfo see if the user belongs to the own network, and if that is not the case transmitRoutingInfo is forwarded towards the home network of the user. This network must be of the same type as the invention with a P-HDB function of its own. Another difference compared with GSM HLR is that P-HDB has a connection to the database personal visitor register P-VDB (Visitor Database). This is performed by P-HDB having a termId connected to userId. P-HDB will in its role as element in the mobility network check terminal compatibility at terminating call via PMAP. Here P-HDB is addressed with a termId which has been obtained via an associated userId.

The connection network can include a number of access nodes AN. These connect a general access network in so far that no restrictions exist regarding type of terminal that can be connected as far as these follow access signalling for DSS.1+ or DSS.1+m, and that the data rate does not exceed 64 kbit/s. Further is required that components on level 2 (for instance MUXes) can follow the generic level 2-protocol UAAP towards the ANC. The connection network is responsible for all terminal mobility in the network and this is performed by the protocol TMAP between ANC and T-HDB. An interesting special case of an access node is a telephone exchange PBX. This can be regarded as consisting of both an access network and an ANC. This results in that the telephone exchange then must emulate the protocols ANAP and TMAP. The telephone exchange can then connect the same types of terminals as an ordinary AN. The only thing that is required is that the telephone exchange can convert the access signalling from its terminals to DSS.1.

In Figure 3 there are no explicit signal network or transport network drawn since these are of no interest for the description. The signal network is in Figure 3 indicated by broken lines, and the transport network (=connections) by unbroken lines. The transport network is a function from level 1-2 and therefore can not be shown on the same level as other functions and protocols which are on level 3 (=Network layer) according to the OSI-model.

The protocol ANAP (Access Node Application Part) includes function for connection/disconnection towards a certain connection point within the access network. ANAP also has the aim of carrying the digital access signalling (DSS.1+). The protocol will have great similarities to BSSAP in GSM.

The following compulsory operations are included in the protocol:

| Operation | Transmitter | Receiver | Function |
|---|---|---|---|
| accessReq | ANC | LX/VDB | Call from terminal (carries the first access message). |
| assignTrafficCh | LX | ANC | Connect terminal towards circuit (CIC) |
| disconnectReq | ANC | LX | Request for disconnection. |
| disconnectCmd | LX | ANC | Disconnect the connection. |
| accessDataReq | ANC | LX/VDB | Transport of signalling data from ANC. |
| accessDataInd | LX/VDB | ANC | Transport of signalling data to ANC. |

The protocol TMAP (Terminal Mobility Application Part) includes functions for terminal registration/deregistration, handover and check of terminal identity (check of the "black list").
The following compulsory operations are included in the protocol:

| Operation | Transmitter | Receiver | Function |
|---|---|---|---|
| termLocUpd | ANC | T-HDB | Terminal has roamed into the network, incl. terminal ON. |
| getTerminalStatus | ANC | T-HDB | Check whether the terminalId is valid and if the terminal is stolen etc. |
| getPagingData | ANC | T-HDB | Request for search addresses, for instance BsId and CellId. |
| handOverReq | ANCold | ANCnew | Request for change of ANC, for instance due to better BS on other ANC. |
| hoEnd | ANCnew | ANCold | ANCnew has taken over the control of the mobile user. |
| terminalDetached | ANC | T-HDB | The terminal OFF. |

The protocol PMAP (Personal Mobility Application Part) includes functions for registration/deregistration of user, authentication and transition of user data.

The following compulsory operations are included in the protocol:

| Operation | Transmitter | Receiver | Function |
|---|---|---|---|
| getAucData | LX/VDB | P-HDB | Collect authentication data. |
| userLocUpd | LX/VDB | P-HDB | A user (and terminal) has roamed into the network. |
| getUserData | LX/VDB | P-HDB | Collect the user's service profile. |
| cancelUser | P-HDB | LX/VDB | The user no longer accessible (roaming to other network, or terminal OFF). |

The protocol IMAP (Internal Mobility Application. Part) includes functions for user registration/deregistration.

The following compulsory operations are included in the protocol:

| Operation | Transmitter | Receiver | Function |
|---|---|---|---|
| userIdValid | P-HDB | T-HDB | Is sent after succeeded location updating and includes reference to the user. |
| userDereg | T-HDB | P-HDB | The terminal is not accessible (for instance OFF), the user no longer accessible. |
| cancelTerminal | P-HDB | T-HDB | Is sent when terminal and user has roamed in to other network. |
| chkTermComp | P-HDB | T-HDB | Is sent at terminating switching train to find out whether called terminal is compatible with calling terminal (level 2- protocol, speed etc). |

The internal interface ISUP+ is based on the present ISUP (ISDN User Part) but with addition of new parameters in the IAM-message. These include signal point code for destination and userId. These parameters replace the old B-number, which results in that routing is performed on signal point code and not on B-number. This also implies that a roaming number allocation need not be made within the network structure according to the invention.

The interface INAP+ is an extended INAP (IN Application part) for coming IN-services. However, INAP+ need not include any mobility functions.

The interface UAAP includes functions for managing of the level DLC (Data Link Control) towards MUXes, base stations etc. UAAP can be based on the standard V.5, but with addition of functions for signals towards base stations.

ISUP+ is also used for routing of switching trains and establishment of connections between the network elements in the switching network. In addition ISUP+ is used in the connection network at handover between ANCs in the same or different connection networks. See Figure 2 and traffic case example "Handover between ANCs within the same AN".

The protocol EMAP constitutes the interface for personal mobility functions between networks of the type of the invention. EMAP is quite symmetrical with regard to the operations, which implies that all operations go in both directions. For instance can P-HDB both receive and initiate the operation transmitRoutingInfo.

Further this implies that all routing information for routing of switching trains (regarding UPT-number) is received/required by P-HDB. The network does not allow communication directly between GWY or LX/VDB and P-HDB in another network, which is allowed in GSM.

The following compulsory operations are included in the protocol:

| Operation | Transmitter | Receiver | Function |
|---|---|---|---|
| cancelLocation | P-HDB | P-HDB | The user's P-HDB requests that the old network shall abolish its reference to the user. |
| setUserData | P-HDB | P-HDB | The user's profile is sent to P-HDB from the user's network. Is used at location updating. |
| sendRoutingInfo | P-HDB | P-HDB | Request for routing information to the LX/VDB-exchange of the destination network. |

The protocol DSS.+1 includes all functions from DSS.1 and functions for user registration (terminal and person mobility). The protocol is the main access protocol for stationary terminals in the network structure. The protocol is at first hand used by modified ISDN-terminals.

The protocol DSS.1+m includes all functions from DSS.1+ with addition of functions for location updating and user registration. The protocol is intended for modified DECT-terminals.

The protocol 04.08+ includes all functions from 0408 and functions for user registration (personal mobility). DSS.1+m is a part amount of this protocol which results in that updated GSM mobiles can emulate DSS.1+m.

The interface NMTaccess+ includes the same functions as DSS.1+,but implemented according to NMT protocol standard. The protol is intended for modified NMT-900-terminals. Analog/digital conversion is performed in the base stations. The protocol is suppported only due to migration reasons.

The protocol DTMF+ follows ordinary DTMF-signalling but has additions for user registration according to UPT phase 1. Analog/digital conversion is performed in MUXes or concentrators (for instance RSS).The protocol is suppported only due to migration reasons.

All access nodes AN belong to the connection network in the network structure according to the invention. An AN includes different types of access networks and to these dedicated access node control units ANC (Access Node Controller), see Figure 3. ANC is AN's most central component and among other things controls all types of handover within the access network and between the access networks. An ANC access network includes all MUXes, concentrators and base stations which exist within the control of an ANC. An ANC has the system carrying interface ANAP towards one or more local exchanges LX/VDB in the service network. In the latter case the ANC can decide towards which LX/VDB one shall signal, depending on for instance availability and load, which creates a powerful and robust system.

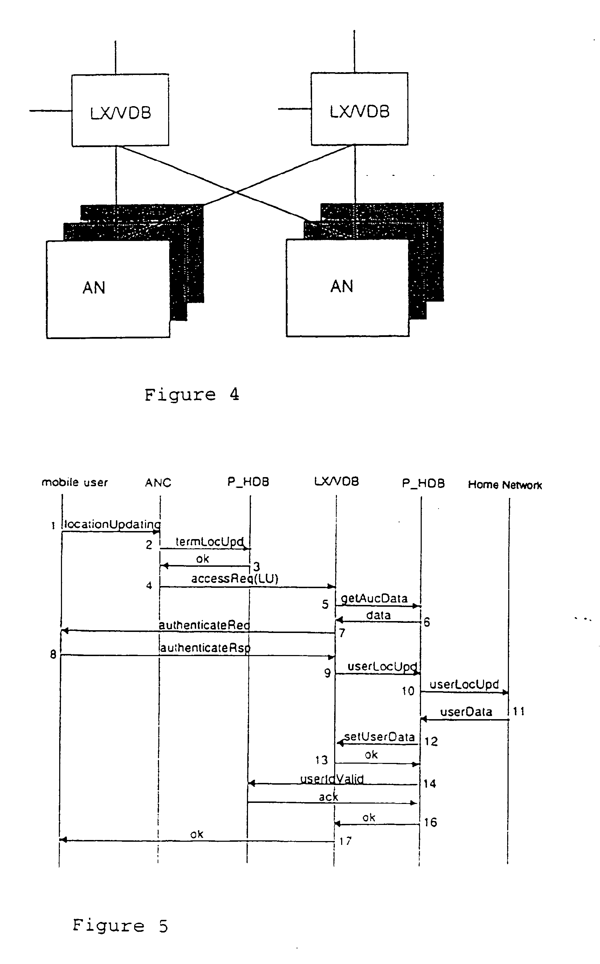

In Figure 4 is shown a cross connected connection between access nodes and two local exchanges. One connection is active whereas the other is standby.

The ANC terminates DLC (Data Link Control) towards its access network via the protocol UAAP (User Access Application Part). Further functions at level 3 for handover and location updating concerning terminal-roaming will be terminated by the ANC. This results in that the access protocols DSS.1+ and DSS.1+m are quite identical when "remaining" access signalling is transported by ANAP towards current LX/VDB in the service network.

The ANC will at handover between base stations within the same access network function in the same way as a GSM BSC, but in addition function as a GSM MSC at handover between ANCs within the same AN (intra-AN-handover), and in the case handover between ANCs belonging to different networks (inter-AN-handover). An ANC will in the two latter cases have the same role as MSC-Anchor in GSM. ANC's total control of handover implies that this function completely belong to the connection network and is not visible in the service network. ANC uses the protocol TMAP for managing handover between ANCs, see Figure 2.

An ANC has, due to its big functional similarity to GSM BSC, of course possibility to be implemented by updating of a BSC.

The local exchange LX/VDB (Local Exchange - Visitor Data base) includes general functions for establishing/breaking up of switching trains, control switching functions and activate different additional services via service nodes. Further LX/VDB has dedicated functions at the use of personal number:
- At location updating LX/VDB will collect the service profile of the user via the P-HDB of the network, and in the same way implement a visitor register (VDB). See traffic case example "Registration of user".
- The local exchange LX/VDB will at user originated switching trains make enquiry towards P-HDB after routing information. See traffic case example "User originated switching trains".

The personal home register P-HDB (Personal Home Data Base) is addressed at all types of operations by a personal number. This implies that P-HDB only has relevance at UPT-calls, i.e. at use of personal numbers. At other calls with ordinary B-number (for instance. E.163) the network can function without support from the P-HDB-function.

P-HDB includes three main structures of data:
Service profiles for the users which are regarded to belong to this network, i. e. have subscription signed at this operator. In these service profiles are included which services the user subscribes to and debiting information.
Information for authentication of the user. P-HDB shall also be able to authenticate other users than users belonging to this network.
Routing tables with addresses to own LX/VDB. These are used at distribution of routing information and annulation of location.
Routing tables with addresses to other networks of this type. These addresses will be signal point codes for corresponding function to P-HDB in these networks.

The following functions are performed/relayed by the personal home register P-HDB:
It distributes authentication data making it possible for the user to be authenticated at location updating and/or user originated calls.
It distributes service profile to users who belong to this network at location updating message from another network (of the same type) which the user has roamed into.
It asks for the service profile of the user from the user's home network (of the same type) at location updating, if the user who has roamed in belongs to another network.
It transmits cancelLocation towards preceding network (of the same type) at location updating.
It asks for routing information from another network (of the same type) at user originated calls, if called user belongs to another network (of the same type).
It gives routing information at request from another network (of the same type) at user terminated calls.

P-HDB can be implemented in different ways: One common T-HDB for the whole network (the GSM-case), sectioned P-HDB on UPT-number, or one dedicated per LX/VDB. This is unimportant at conceptual network level since protocol and interface are not influenced; on the other hand the size of the routing tables will be larger in the two latter cases.

The biggest task of the terminal home register T-HDB is to look after in which access network (=ANC-address) a terminal is, and to which user (userId) this terminal is connected. T-HDB is always addressed by a terminal identity (terminalId).

The most important data structures of the terminal home register T-HDB are:
Terminal profiles over the terminal types which are allowed to roam into the network.
Table with terminal data and roaming data (BS-address, MUX-address etc) to the terminals which have roamed into the network. In this data structure are also included references to the userId which is connected to the terminal.
Routing table with addresses to all ANCs in the connection network (used at handover).

The following functions are performed/relayed by the terminal home register T-HDB:
It checks whether the terminal is approved and not "blacklisted" and stores reference to terminal at location updating.
It stores reference to user and gives reference for current terminal to P-HDB.
It checks whether the terminals are compatible at user terminated calls.
It distributes paging data at request from ANC (terminating calls).

T-HDB can be implemented in different ways: One common T-HDB for the whole AN, or one dedicated per ANC. This is unimportant at conceptual network level since protocol and interface are not influenced, on the other hand the size of the routing tables will be larger in the latter case.

The transit exchange FX has transit connection functions for switching trains to/from other parts of the network. FX therefore only manages signal functions belonging to ISUP+. FX carries traffic to/from its subordinated local exchanges LX/VDB, other FX or the network port GWY.

The network port GWY functions as "gateway" towards another network, i.e. carries traffic to/from the own network. Just like the transit exchange FX it therefore has transit connection functions. In the general case there is one network port GWY per other network, but in the most simple case one only has one GWY for all other networks.

### TRAFFIC CASE EXAMPLES

The traffic cases presuppose that the other network is of the same type and that a UPT-number is used. Further, any fault cases are not dealt with.

### Registration of user with mobile terminal from another network; Figure 5

1. A terminal roames into the network by a new network code being detected by the mobile. The mobile transmits a location updating message. The message includes terminalId, userId and new Location Area Identity, LAI.
2. ANC gets via its BS the location updating message. ANC checks via T-HDB whether the terminal type is approved for the network via the operation termLocUpd towards T-HDB. In the operation LAI is included, from which T-HDB derives search data (i.e. ANC-address and BS-address).
3. The terminal type is OK and an acknowledgement is sent.
4. T-HDB forwards the location updating message by means of the ANAP-message accessReq.
5. LX/VDB asks for authentication data from P-HDB (random number).
6. Random number and SRES is received by P-HDB.
7. Authentication request is sent towards the mobile.
8. The mobile answers with its result (calculated SRES) .
9. The authentication of the user is OK and location updating request by the user is sent towards the own P-HDB.
10. P-HDB detects that the user's home network identity is not the same as that of the own network. P-HDB then addresses a routing table by parts of userId and gets an address to the home network (=the P-HDB of the network). The operation userLocUpd is performed towards the home network.
11. The home network stores address to the P-HDB of the new network and after that acknowledges the operation by the message userData. The home network then initiates the operation cancelLocation, see above.
12. User data is forwarded towards LX/VDB in the form of the operation setUserData.
13. LX/VDB acknowledges the operation.
14. The operation userIdValid is performed towards T-HDB to confirm a successful location updating. The operation includes userId.
15. T-HDB enters userId in the data area for this terminal. After that the operation is acknowledged towards P-HDB.
16. UserLoc Upd from LX/VDB is acknowledged.
17. The LocationUpd message from the mobile is acknowledged and after that the whole procedure is finished.

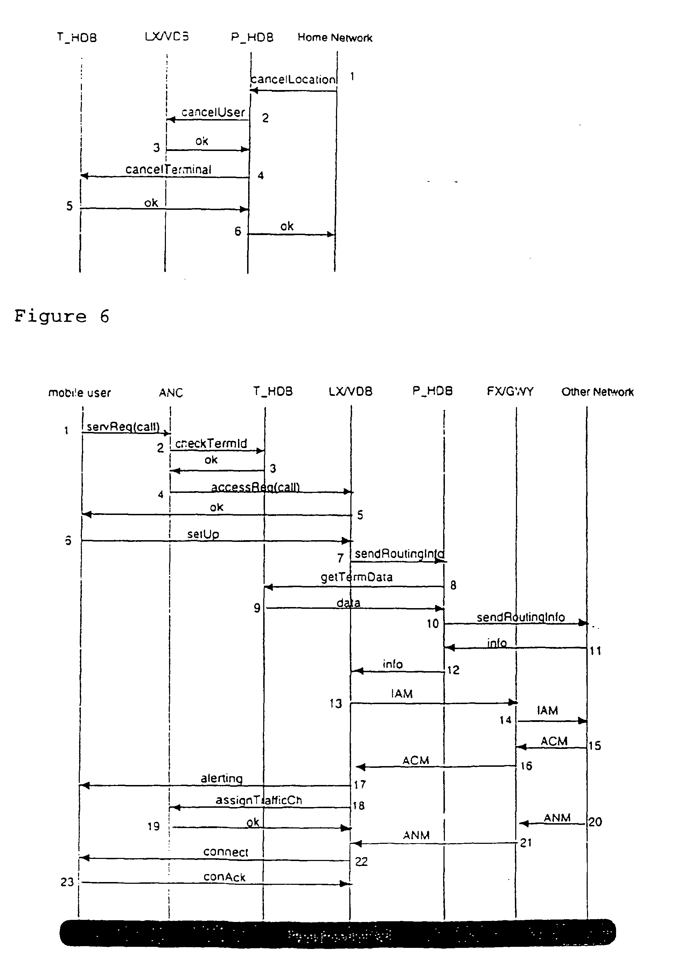

### Dereaistration of user; Figure 6

1. The home network for the user transmits cancelLocation towards the old network.
2. P-HDB initiates the operation cancelUser towards LX/VDB, at which the user is removed from the VDB.
3. LX/VDB acknowledges the operation.
4. P-HDB initiates the operation cancelTerminal towards T-HDB. T-HDB removes reference to the terminal.
5. T-HDB acknowledges the operation.
6. P-HDB acknowledges the operation cancelLocation.

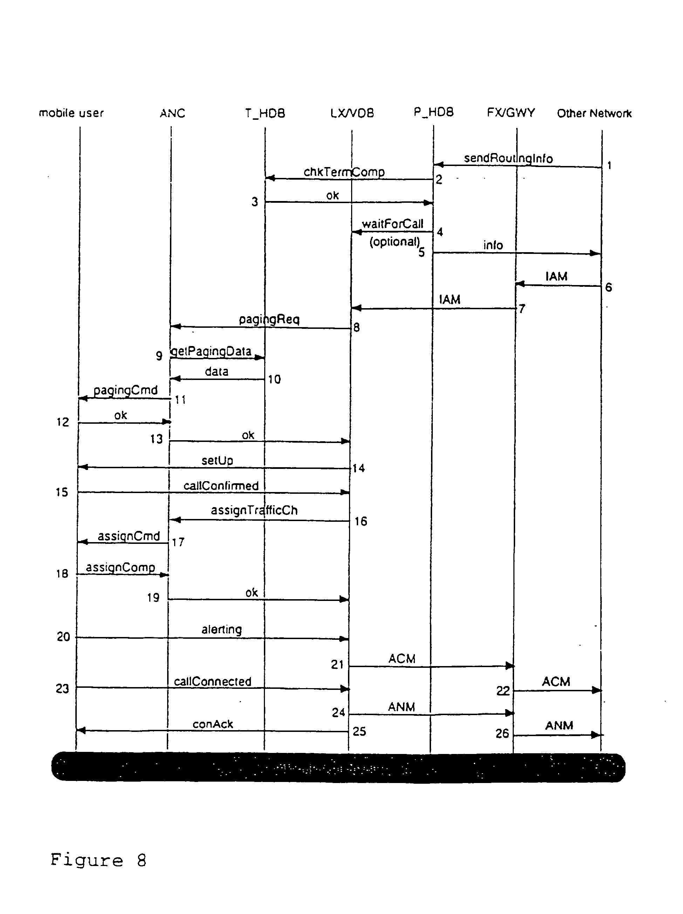

### User originated calls from mobile terminal; Figure 7

1. The user transmits a service request towards ANC. The message includes wanted service (=ordinary speech) and userId and terminalId. Requested service is ordinary speech.
2. ANC initiates the operation chkTermStatus towards T-HDB.
3. T-HDB checks that the terminal has roamed in and that userId is the same as previously and after that acknowledges the operation.
4. The call is forwarded towards LX/VDB by means of the message accessReq.
5. LX/VDB acknowledges the request, the answer is carried towards the mobile via ANC by the message accessDataInd.
6. The mobile now transmits the setUp-message with the UPT-number of the called (userId) towards LX/VDB via ANC. SetUp is carried by the ANAP-message accessDataReq.
7. LX/VDB sees that a UPT-number has been used and then performs the operation transmitRoutingInfo towards P-HDB. The UPT-number consequently functions as an IN-trigger.
8. P-HDB asks for information of current type of terminal which the user utilizes via the operation getTermStatus towards T-HDB.
9. Answer is sent from T-HDB towards P-HDB. P-HDB thereafter performs an analysis of the UPT-number and finds that the user belongs to another network.The analysis also produces as output data address to the user's network.
10. P-HDB performs the operation transmitRoutingInfo towards the home network of the called (=the P-HDB-function in this network). Terminal type information as well as the userId of the called is enclosed as data.
11. The home network answers with routing information (=roaming number to LX/VDB in the home network and current ANC-address for the user).
12. The routing information is forwarded towards LX/VDB. P-HDB has after that acknowledged the request for routing information from LX/VDB.
13. LX/VDB forwards the routing information by means of the ISUP+-message IAM towards superior FX. The roaming number to LX/VDB is used as GT (Global Title) for IAM.
14. FX forwards after new routing analysis IAM towards superior GWY.
15. GWY forwards IAM towards the other network.
16. The home network makes logical checks regarding userId and connected terminal type (see above) and after that answers with ACM towards GWY.
17-23. Connection between A-user and B-user is performed in the same way as in GSM. Disconnection also follows the GSM-procedures.

### User terminated calls towards mobile terminal; Figure 8

1. The TransmitRoutingInfo operation is received in P-HDB from another network. UserId and terminalType is accompanied as data.
2. P-HDB checks that the terminal of the A-user is compatible with the terminal of the called user by the operation chkTermComp towards P-HDB.
3. P-VDB checks the terminal data of the A-user towards the terminal data of the called user and after that acknowledges the operation (with an OK).
4. In order to raise the speed of the connection, P-HDB can optionally prepare LX/VDB for this by means of the operation waitForCall, which includes the userId of called user. WaitForCall need not be acknowledged since connection also functions without this operation.
5. The operation transmitRoutingInfo is acknowledged by P-HDB. Information of roaming number to current LX/VDB and AND-address is enclosed.
6. GWY receives IAM from the other network and forwards it towards current FX. The FX forwards IAM towards current LX/VDB.
7. LX/VDB initiates searching towards the mobile via the ANAP-message pagingReq towards the ANC.
8. ANC asks for search data (ANC-address and cellId) for called user via the operation getPagingData towards T-HDB.
9. Search data is returned by T-HDB.
10. ANC initiates searching towards the mobile via the message pagingCmd.
11. Searching is performed towards one or more BS and at (first) acknowledgement from the mobile this is forwarded towards the ANC.
12. ANC acknowledges the search request from LX/VDB.
12-13. Connection is performed in the same way as in GSM-terminated calls.

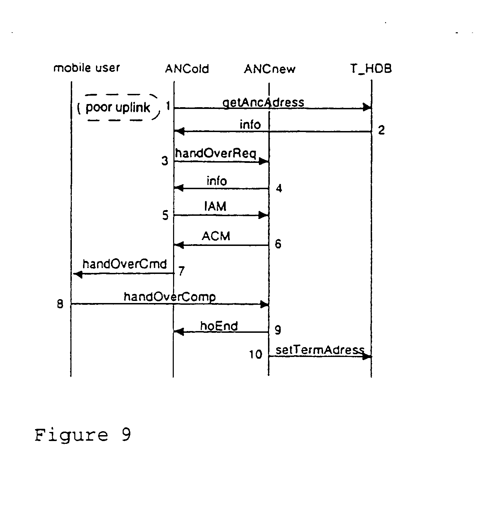

### Handover between access node control units ANC belonging to the same acccess node AN; Figure 9

1. Current BS detects poor uplink and informs ANC about this. ANC gets a list over new cell candidates. ANC selects one (for instance the first in the list) which belongs to another ANC. ANC detects via analysis that this cellId belongs to another ANC. ANC after that performs the operation getAncAddress towards T-HDB to get the ANC-address (= signal point code) to the new ANC.
2. T-HDB translates ANC-number into ANC-address. T-HDB answers to the operation and encloses the ANC-address.
3. The old ANC performs the operation handoverReq towards the new ANC by means of the ANC-address. Data about cellId and radio parameters is enclosed.
4. The new ANC allocates radio resources and physical circuit and after that handOverReq is acknowledged. No handover number is handed over (as in GSM) since a signal point code to the new ANC has already been handed out by T-HDB.
5. The old ANC asks for switching train to be established towards new ANC via the IAM-message.
6. Switching train is completed up to the not radio based parts of BS. ANC now transmits ACM towards the old ANC.
7. The old ANC informs the mobile of the new radio parameters and the mobile changes to the new cell (belonging to the new ANC).
8. The mobile informs the new ANC that it has accessed the new cell by the message handOverComp.
9. The new ANC informs that the mobile now is within the new access network by initiating the operation hoEnd towards the old ANC. ANC now makes free all resources associated to the connection towards the old BS. If three-part bridge has been used, also this is made free.
10. Finally, T-HDB's new ANC-address is set for this terminal, via the message setTermAddress from the new ANC.

Consequently the invention supplies a network architecture which consists of both logical and physical aspects, and can be used to make the narrow band networks of today more effective and turn these towards a common UPT-architecture. The great advantage is above all coordination benefits between the NMT-, GSM-, PSTN- and ISDN-networks of today, both regarding the degree of occupation (fewer exchanges with higher average load) and management advantages (a network with a source system) .

Since the invention is a network architecture this also implies that it is technology- and supplier independent, which means that the network can be built cheaper than if one selected a certain supplier with a certain technology. Further the network can include heterogenous technology, for instance in the connection network and the switching network. This is a big andvantage since the whole network need not be pulled down at technological upgradings in certain parts of the network, for instance the connection network. It is quite possible to today implement the invention in existing technology to avoid expensive new investments, just as other (better) technology can be used for capacity reasons.

Because a general connection network is included as one of the keystones in the recommendation, this implies that also alternative accesses such as the DECT and CATV-network can be managed without the service network being influenced, since the service network is defined to be access independent. Also broad band accesses in the form of TCP/IP LAN can be connected, but this is not dealt with in this patent application.

The invention is only restricted to the patent claims below.

### Concepts and abbreviations

- Access network: Equipment on level 2 (MUX, concentrator etc) between terminal and ANC.
- AN: Access Node.
- ANAP: Access Node Application Part. Protocol between LX/VDB and AN.
- ANC: Access Node Controller.
- DECT: Digital European Cordless Telecommunication. Concerns access protocol for cordless telephones of second generation.
- DSS.1: N-ISDN access protocol.
- DSS.1+: Access protocol of the invention for stationary terminals. Includes DSS.1 plus registration/deregistration of users.
- DSS.1+m: Access protocol of the invention for mobile terminals. Includes DSS.1+ and mobility management and radio resource functions such as for instance location updating and handover.
- EMAP: external Mobility Application Part. Protocol between P-HDB in different networks of the type of the invention.
- FX: Transit exchange.
- GMY: Network port exchange towards other networks of the type of the invention.
- IMAP: Internal Mobility Application Part. Protocol between P-HDB and T-HDB.
- INAP: IN Application Part. Protocol between IN-nodes.
- INAP+: Improved IN, however without mobility functions in the NIAPN.
- ISUP: ISDN User Part. Protocol between network element in ISDN for establishing of switching train.
- ISUP+: The network protocol of the invention for establishing of switching train. Routing is also allowed on SPC; in other respects identical to ISUP.
- LX/VDB: Local Exchange and Visitor Data Base.
- NIAPN: Narrowband Integrated Application Network, i.e. a network in accordance with the present invention.
- PBX: Public Branch Exchange.
- PMAP: Personal Mobility Application Part. Protocol between LX/VDB and P-HDB.
- P-HDB: Personal user - Home Data Base.
- TMAP: Terminal Mobility Application Part. Protocol between ANC and T-HDB, and between different ANCs (handover).
- T-HDB: Terminal - Home Data Base.

## Claims

1. Narrowband integrated application network for telecommunication, **characterized in that** said network includes four functional subnetworks and **in that** said functional subnetworks include:
a mobility network consisting of a personal mobility function and a terminal mobility function, and an Internal Mobility Application part-based interface (IMAP) between said personal mobility function and said terminal mobility function;
- a service network consisting of said personal mobility function and a function for network services, and a Personal Mobility Application Part-based interface (PMAP) between said personal mobility function and said function for network services;
- a switching network consisting of a function for accesses and said function for network services; and a Access Node Application Part-based interface (ANAP) between said function for accesses and said function for network services; and
- a connection network consisting of said function for accesses and said terminal mobility function, and a Terminal Mobility Application Part-based interface (TMAP) between said function for accesses and said terminal mobility function.

2. Network according to patent claim 1, **characterized in that** the mobility network includes a Personal User-Home Data Base (P-HDB), a Terminal-Home Data Base (T-HDB) and said Internal Mobility Application Part-based interface (IMAP) between said Personal User-Home Data Base (P-HDB) and said Terminal-Home Data Base (T-HDB), and wherein the mobility network is configured to manage registration/deregistration functions for personal mobility and terminal mobility.

3. Network according to patent claim 2, **characterized in that** the service network includes the Personal User-Home Data Base (P-HDB),a Local Exchange and Visitor Data Base (LX/VDB) and said Personal Mobility Application Part-based interface (PMAP) between said Personal User-Home Data Base (P-HDB) and said Local Exchange and Visitor Data Base (LX/VDB), and wherein the service network is configured to manage personal mobility and network services.

4. Network according to any of patent claims 1 - 3, **characterized in that the** switching network is configured to manage accesses and network services.

5. Network according to any of patent claims 1 - 4, **characterized in that** the connection network includes a number of access nodes (AN) and is responsible for terminal mobility in the network by means of the Terminal Mobility Application Part-based interface (TMAP) between an Access Node Controller (ANC) comprised in an Access Node (AN) and the Terminal-Home Data Base (T-HDP).

6. Network according to any of the previous patent claims, **characterized in that** it includes interface towards other network regarding person mobility (EMAP) and network services (ISUP+) and access interface towards mobile (DSS.1+m) terminals.

7. Network according to any of the previous patent claims, **characterized in that** it includes the components user, terminal, connection point and network element, each with an addressable identity.

8. Network according to patent claim 7, **characterized in that** the user can have a personal number with a specific identity (userId) which is utilized to provide personal mobility.

9. Network according to patent claim 8, **characterized in that** said connection network comprises an access node (AN) which is also part of the switching network, said access node (AN) comprises an access node controller, said controller comprising means for the ANAP-interface and means for communicating with a number of units including multiplexors (MUX), base stations (BS), concentrators and interworking units (JWU).

10. Network according to patent claim 2, **characterized in that** the switching and service network include a LX/VDB, said LX/VDB always addressing the networks P-HDB and never directly any other networks P-HDB.

11. Network according to patent claim 10, **characterized in that** said P-HDB has a connection to the database personal visitor register P-VDB.

12. Network according to patent claim 11 and claim 8, **characterized in that** said connection is performed by said P-HDB having a termId connected to said userId.

13. Protocol (ANAP) for use in a telecommunication network according to patent claim 1, **characterized in that** said protocol comprises operations for connection/disconnection towards a certain connection point.

14. Protocol (TMAP) for use in a telecommunication network according to patent claim 1, **characterized in that** said protocol includes functions for terminal registration/deregistration, handover and check of terminal identity.

15. Protocol (PMAP) for use in a telecommunication network according to patent claim 1, **characterized in that** said protocol includes function for registration/deregistration of user, authentication and transition of user data.

16. Protocol (IMAP) for use in a telecommunication network according to patent claim 1, **characterized in that** said protocol includes functions for user registration/deregistration.

17. Internal interface (ISUP+) for use in a communication network according to patent claim 1, **characterized in that** said interface connects a transit exchange (FX) and a local exchange and visitor database (LX/VDB) and **in that** an IAM-message includes signal point code for destination and userId.

## Patentansprüche

1. Integriertes Schmalband-Anwendungsnetz für die Telekommunikation, **dadurch gekennzeichnet, dass** das Netz vier funktionale Unternetzwerke hat, und dass die funktionalen Unternetzwerke aufweisen:
ein Mobilnetz bestehend aus einer Personenmobilitätsfunktion und einer Anschlussmobilitätsfunktion, und einer auf dem internen Mobilitätsanwendungsteil basierenden Schnittstelle (IMAP) zwischen der Personenmobilitätsfunktion und der Anschlussmobilitätsfunktion;
- ein Servicenetz bestehend aus der Personenmobilitätsfunktion und einer Funktion für Netzwerkdienste, und einer auf einem Personenmobilitäts-Anwendungsteil basierenden Schnittstelle (PMAP) zwischen der Personenmobilitätsfunktion und der Funktion für die Netzwerkdienste;
- ein Schaltnetz, bestehend aus einer Zugangsfunktion und der Funktion für die Netzwerkdienste; und einer auf einem Zugangsknotenanwendungsteil basierenden Schnittstelle (ANAP) zwischen der Zugangsfunktion und der Funktion für die Netzwerkdienste; und
- ein Verbindungsnetz bestehend aus der Zugangsfunktion und der Anschlussmobilitätsfunktion und einer auf einem Anschlussmobilitätsanwendungsteil basierenden Schnittstelle (TMAP) zwischen der Zugangsfunktion und der Anschlussmobilitätsfunktion.

2. Netz nach Anspruch 1, **dadurch gekennzeichnet , dass** das Mobilitätsnetz eine Personennutzer-Heimdatenbasis (P-HDB), eine Anschluss-Heimdatenbasis (T-HDB) und die auf dem internen Mobilitätsanwendungsteil basierende Schnittstelle (IMAP) zwischen der Personennutzer-Heimdatenbasis (P-HDB) und der Anschluss-Heimdatenbasis (T-HDB) aufweist, und wobei das Mobilitätsnetz so konfiguriert ist, dass es die Registrierungs-Funktionen für die Personenmobilität und Anschlussmobilität verwalten kann.

3. Netz nach Patentanspruch 2, **dadurch gekennzeichnet , dass** das Dienstnetz eine Personennutzer-Heimdatenbasis (P-HDB), eine lokale Austausch- und Besucher-Datenbasis (LX/VDB) und die auf dem Personenmobilitäts-Anwendungsteil basierende Schnittstelle (PMAP) zwischen der Personennutzer-Heimdatenbasis (P-HDB) und der lokalen Austausch- und Besucher-Datenbasis (LX/VDB) hat, und wobei das Dienstnetz so konfiguriert ist, dass es die Personenmobilität und Netzdienste verwalten kann.

4. Netz nach einem der Ansprüche 1 bis 3, **dadurch gekennzeichnet , dass** das Schaltnetz für die Verwaltung der Zugänge und Netzwerkdienste konfiguriert ist.

5. Netz nach einem der Ansprüche 1 bis 4, **dadurch gekennzeichnet , dass** das Verbindungsnetz eine Anzahl von Zugangsknoten (AN) hat und für die Anschlussmobilität im Netz mittels der auf dem Anschlussmobilitätsanwendungsteil basierenden Schnittstelle (TMAP) zwischen einer Zugangsknotensteuerung (ANC), die in einem Zugangsknoten (AN) enthalten ist, und der Anschluss-Heimdatenbasis (T-HDP) zuständig ist.

6. Netz nach einem der vorstehenden Ansprüche, **dadurch gekennzeichnet , dass** es eine Schnittstelle zu einer auf ein anderes Netz bezogenen Personenmobilität (EMAP) und Netzwerkdiensten (ISUP+) und eine Zugangsschnittstelle zu Mobil-(DSS.1+m)-Anschlüssen hat.

7. Netz nach einem der vorstehenden Ansprüche, **dadurch gekennzeichnet , dass** es Komponentennutzer, Anschluss, Verbindungspunkt und Netzwerkelement, jeweils mit einer adressierbaren Identität aufweist.

8. Netz nach Anspruch 7, **dadurch gekennzeichnet , dass** der Benutzer eine Personennummer mit einer spezifischen Identität (Benutzer-Id) haben kann, die zur Schaffung einer Personenmobilität verwendet wird.

9. Netz nach Anspruch 8, **dadurch gekennzeichnet , dass** das Verbindungsnetz einen Zugangsknoten (AN) hat, der auch ein Teil des Schaltnetzes ist, wobei der Zugangsknoten (AN) eine Zugangsknotensteuerung aufweist, die Steuerung Mittel für die ANAP-Schnittstelle und Mittel für die Kommunikation mit einer Anzahl von Einheiten, die Multiplexer (MUX), Basisstationen (BS), Konzentratoren und Zusammenarbeitungseinheiten (IWU) aufweist.

10. Netz nach Patentanspruch 2, **dadurch gekennzeichnet , dass** das Schalt- und Dienstnetz einen LX/VDB enthält, wobei der LX/VDB immer die Netze P-HDB und niemals direkt irgendeines der anderen Netze P-HDB adressiert.

11. Netz nach Patentanspruch 10, **dadurch gekennzeichnet , dass** die P-HDB eine Verbindung zu dem Datenbasis-Personenbesucherregister P-VDB hat.

12. Netz nach Patentanspruch 11 und Anspruch 8, **dadurch gekennzeichnet , dass** die Verbindung durch die P-HDB durchgeführt wird, die eine Term-Id hat, welche an die Benutzer-Id angeschlossen ist.

13. Protokoll (ANAP) zur Verwendung in einem Telekommunikationsnetz gemäß Patentanspruch 1, **dadurch gekennzeichnet , dass** das Protokoll Operationen für die Verbindung/Unterbrechung mit einem gewissen Verbindungspunkt aufweist.

14. Protokoll (TMAP) zur Verwendung in einem Telekommunikationsnetz gemäß Patentanspruch 1, **dadurch gekennzeichnet , dass** das Protokoll Funktionen für die Anschluss-Registrierung/-Deregistrierung, Übernahme und Überprüfung der Anschlussidentität hat.

15. Protokoll (PMAP) zur Verwendung in einem Telekommunikationsnetz gemäß Patentanspruch 1, **dadurch gekennzeichnet , dass** das Protokoll eine Funktion für die Registrierung/Deregistrierung eines Nutzers, Authentifizierung und den Übergang von Nutzerdaten hat.

16. Protokoll (IMAP) zur Verwendung in einem Telekommunikationsnetz gemäß Patentanspruch 1, **dadurch gekennzeichnet , dass** das Protokoll Funktionen für die Nutzer-Registrierung/-Deregistrierung aufweist.

17. Interne Schnittstelle (ISLTP+) zur Verwendung in einem Kommunikationsnetz gemäß Patentanspruch 1, **dadurch gekennzeichnet , dass** die Schnittstelle einen Übergangsaustausch (FX) und einen lokalen Austausch und eine Besucherdatenbasis (LX/VDB) verbindet, und dass eine IAM-Mitteilung einen Signalpunktcode für das Ziel und die Benutzer-Id enthält.

## Revendications

1. Réseau d'applications intégré en bande étroite pour télécommunications, **caractérisé en ce que** ledit réseau comprend quatre sous-réseaux fonctionnels et **en ce que** lesdits sous-réseaux fonctionnels comprennent :
un réseau de mobilité composé d'une fonction de mobilité personnelle et d'une fonction de mobilité de terminal, et d'une interface basée sur la partie d'application Mobilité Interne (IMAP) entre ladite fonction de mobilité personnelle et ladite fonction de mobilité de terminal ;
un réseau de service composé de ladite fonction de mobilité personnelle et d'une fonction de services réseau, et d'une interface basée sur la partie d'application Mobilité Personnelle (PMAP) entre ladite fonction de mobilité personnelle et ladite fonction de services réseau ;
un réseau à commutation composé d'une fonction pour les accès et de ladite fonction de services réseau ; et d'une interface basée sur la partie d'application Noeud d'accès (ANAP) entre ladite fonction pour les accès et ladite fonction de services réseau ; et
un réseau de connexion composé de ladite fonction pour les accès et de ladite fonction de mobilité de terminal, et d'une interface basée sur la partie d'application Mobilité de terminal (TMAP) entre ladite fonction pour les accès et ladite fonction de mobilité de terminal.

2. Réseau selon la revendication 1, **caractérisé en ce que** le réseau de mobilité comprend une Base de données maison - Utilisateur personnel (P-HDB), une Base de données maison - Terminal (T-HDB) et ladite interface basée sur la partie d'application Mobilité Interne (IMAP) entre ladite Base de données maison - Utilisateur personnel (P-HDB) et ladite Base de données maison - Terminal (T-HDB), et dans lequel le réseau de mobilité est configuré pour gérer les fonctions d'enregistrement/désenregistrement pour la mobilité personnelle et la mobilité de terminal.

3. Réseau selon la revendication 2, **caractérisé en ce que** le réseau de service comprend la Base de données maison - Utilisateur personnel (P-HDB), une Base de données Centre local et Visiteurs (LX/VDB) et ladite interface basée sur la partie d'application Mobilité Personnelle (PMAP) entre ladite Base de données maison - Utilisateur personnel (P-HDB) et ladite Base de données Centre local et Visiteurs (LX/VDB), et dans lequel le réseau de services est configuré pour gérer la mobilité personnelle et les services réseau.

4. Réseau selon l'une quelconque des revendications 1 à 3, **caractérisé en ce que** le réseau à commutation est configuré pour gérer des accès et services réseau.

5. Réseau selon l'une quelconque des revendications 1 à 4, **caractérisé en ce que** le réseau de connexion comprend un certain nombre de noeuds d'accès (AN) et est chargé de la mobilité de terminal dans le réseau au moyen de l'interface basée sur la partie d'application Mobilité de terminal (TMAP) entre un contrôleur de noeuds d'accès (ANC) compris dans un Noeud d'accès (AN) et la Base de données maison - Terminal (T-HDB).

6. Réseau selon l'une quelconque des revendications précédentes, **caractérisé en ce qu'**il comprend une interface vers un autre réseau concernant la mobilité personnelle (EMAP) et les services réseau (ISUP+) et une interface d'accès vers des terminaux mobiles (DSS.1+m).

7. Réseau selon l'une quelconque des revendications précédentes, **caractérisé en ce qu'**il comprend les composants utilisateur, terminal, point de connexion et élément de réseau, chacun avec une identité adressable.

8. Réseau selon la revendication 7, **caractérisé en ce que** l'utilisateur peut avoir un numéro personnel avec une identité spécifique (userId, *identifiant utilisateur)* qui est utilisé pour fournir une mobilité personnelle.

9. Réseau selon la revendication 8, **caractérisé en ce que** ledit réseau de connexion comprend un noeud d'accès (AN) qui fait également partie du réseau à commutation, ledit noeud d'accès (AN) comprend un contrôleur de noeud d'accès, ledit contrôleur comprenant des moyens pour l'interface ANAP et des moyens pour communiquer avec un certain nombre d'unités comprenant des multiplexeurs (MUX), des stations de base (BS), des concentrateurs et des unités d'interfonctionnement (JWU).

10. Réseau selon la revendication 2, **caractérisé en ce que** les réseaux à commutation et de service comprennent une LX/VDB, ladite LX/VDB adressant toujours la P-HDB des réseaux et jamais directement la P-HDB de tous autres réseaux.

11. Réseau selon la revendication 10, **caractérisé en ce que** ladite P-HDB a une connexion au registre visiteurs personnels de la base de données P-VDB.

12. Réseau selon les revendications 8 et 11, **caractérisé en ce que** ladite connexion est réalisée par ladite P-HDB ayant un identifiant termId connecté audit identifiant userId.

13. Protocole (ANAP) destiné à être utilisé dans un réseau de télécommunications selon la revendication 1, **caractérisé en ce que** ledit protocole comprend des opérations de connexion/déconnexion vers un certain point de connexion.

14. Protocole (TMAP) destiné à être utilisé dans un réseau de télécommunications selon la revendication 1, **caractérisé en ce que** ledit protocole comprend des fonctions d'enregistrement/désenregistrement de terminal, de transfert intercellulaire et de vérification de l'identité des terminaux.

15. Protocole (PMAP) destiné à être utilisé dans un réseau de télécommunications selon la revendication 1, **caractérisé en ce que** ledit protocole comprend des fonctions d'enregistrement/désenregistrement de l'utilisateur, d'authentification et de transition des données d'utilisateur.

16. Protocole (IMAP) destiné à être utilisé dans un réseau de télécommunications selon la revendication 1, **caractérisé en ce que** ledit protocole comprend des fonctions d'enregistrement/désenregistrement d'utilisateur.

17. Interface interne (ISUP+) destiné à être utilisé dans un réseau de communication selon la revendication 1, **caractérisé en ce que** ladite interface connecte un Centre de transit (FX) et une base de données Centre local et Visiteurs (LX/VDB) et **en ce qu'**un message IAM comprend un code de point de signal pour la destination et l'identifiant userId.
